# EUROPÄISCHE PATENTANMELDUNG

(11) **EP 3 059 928 A1**
(43) Veröffentlichungstag der Anmeldung: **24.08.2016**
(21) Anmeldenummer: 15156127.1
(22) Anmeldetag: 23.02.2015
(51) Int. Cl.: H04L 29/08, H04W 4/00

(54) **EINGABEGERÄT SOWIE DIENSTGERÄTESYSTEM MIT DRAHTLOSER KOMMUNIKATIONSSCHNITTSTELLE**

(71) Anmelder: W. Gessmann GmbH, 74211 Leingarten (DE)
(72) Erfinder: Ehrensperger, Alwin, 74074 Heilbronn (DE); Eggensperger, Martin, 74078 Heilbronn (DE)
(74) Vertreter: Kohler Schmid Möbus Patentanwälte

(57) **Zusammenfassung**

Die Erfindung betrifft ein Eingabegerät (12), insbesondere Verbundantrieb, zum Steuern von Arbeitsgeräten und Fahrzeugen (14), umfassend eine im Eingabegerät (12) integrierte Steuereinheit (30)
- mit einem Datenspeicher (32),
- mit einer im Datenspeicher (32) abgespeicherten Betriebssoftware (34) zum Erzeugen von Steuersignalen (36) auf Grundlage einer Betätigung des Eingabegeräts (30);
- mit einer Hardwareschnittstelle (38) zur Ausgabe der Steuersignale (36); und
- mit einer drahtlosen Kommunikationsschnittstelle (44) für eine drahtlose Verbindung des Eingabegeräts (12) mit einem mobilen Endgerät 16), das zur Diagnose-, Wartung und/oder Konfiguration des Eingabegeräts (12) ausgebildet ist oder über das eine Verbindung des Eingabegeräts (12) mit einer zentralen Recheneinheit (18) zur Diagnose-, Wartung und/oder Konfiguration des Eingabegeräts (12) herstellbar ist.

Die Erfindung betrifft weiterhin ein Dienstgerätesystem mit zumindest einem solchen Eingabegerät.

## Beschreibung

Mobile Arbeitsgeräte und Fahrzeuge, wie beispielsweise Gabelstapler, Bagger, spurgebundene Triebfahrzeuge oder Schiffe, weisen Eingabegeräte auf, mittels derer die Arbeitsgeräte bzw. Fahrzeuge durch eine Bedienperson gesteuert werden können. Die Eingabegeräte können beispielsweise in Form von Steuerknüppeln, Fahr- oder Fahrbremsschaltern ausgebildet sein. Die am Markt verfügbaren Eingabegeräte müssen zwecks einer hohen Einsatzflexibilität in ihrer Funktionalität frei konfigurierbar sein und weisen deshalb häufig eine geräteinterne Steuereinheit mit einem Datenspeicher und mit einer im Datenspeicher abgespeicherten (konfigurierbaren) Betriebssoftware für das Eingabegerät auf. Zur Ausgabe der durch das Eingabegerät generierten Steuersignale dient eine Hardwareschnittstelle, über die das Eingabegerät mittels einer Datenleitung kabelgebunden an eine zentrale elektronische Steuereinrichtung des Arbeitsgeräts oder Fahrzeugs angeschlossen werden kann. Die Eingabegeräte können beispielsweise über ein sogenanntes Bussystem mit der zentralen Steuereinrichtung des Arbeitsgeräts bzw. Fahrzeugs verbunden sein.

Die Eingabegeräte müssen zur Wartung oder Konfiguration des Eingabegeräts (bzw. des Betriebssystems) sowie auch zur Fehlerdiagnose aus seiner Montageposition am Arbeitsgerät bzw. Fahrzeug, beispielsweise aus einer Armaturentafel, in der Regel ausgebaut werden. Die Eingabegeräte werden nachfolgend, beispielsweise über ein an die Hardwareschnittstelle anzuschließendes Kabel, mit einem Computer verbunden, um die vorstehend genannten Servicearbeiten durchführen zu können. Dies ist zeit- und arbeitsaufwändig und führt häufig zu unerwünscht langen Ausfallzeiten des Arbeitsgeräts oder Fahrzeugs.

Es ist deshalb die Aufgabe der Erfindung, ein Eingabegerät sowie ein Dienstgerätesystem anzugeben, bei denen die Fehlerdiagnose, Wartung und Konfiguration des Eingabegeräts weniger arbeits- und zeitraubend und insgesamt kostengünstiger ist.

Die das Eingabegerät betreffende Aufgabe wird durch ein Eingabegerät mit den in Patentanspruch 1 angegebenen Merkmalen und die das Dienstgerätesystem betreffende Aufgabe durch ein Dienstgerätesystem mit den in Patentanspruch 10 angegebenen Merkmalen gelöst. Bevorzugte Weiterbildungen der Erfindung sind in den Unteransprüchen sowie der in Beschreibung angegeben.

Das erfindungsgemäße Eingabegerät weist eine integrierte, d.h. geräteinterne, Steuereinheit mit einer drahtlose Kommunikationsschnittstelle für eine drahtlose Datenverbindung zwischen der Steuereinheit des Eingabegeräts und einem mobilen Endgerät auf, das zur Diagnose-, Wartung und/oder Konfiguration des Eingabegerät ausgebildet ist bzw. über das mittels einer zentralen Recheneinheit (= Diagnose- bzw. Wartungsserver) ein Fernzugriff auf die Steuereinheit des Eingabegeräts herstellbar ist. Das Eingabegerät kann dadurch auf vereinfache und kostengünstige Weise einer Funktionsdiagnose unterzogen, gewartet und/oder dessen Betriebsparameter konfiguriert werden, ohne dass das Eingabegerät hierzu aus seiner Einbauposition am Arbeitsgerät bzw. Fahrzeug entfernt werden muss. Darüber hinaus muss das Eingabegerät nicht mittels eines elektrischen Kabels an das mobile Endgerät angeschlossen werden, wodurch sich der Arbeits-, Zeit- und Kostenaufwand bei den jeweilig auszuführenden Diagnose-, Wartungs- bzw. Konfigurationsarbeiten insgesamt verringert. Spezielle Anschlusskabel müssen nicht vorgehalten werden. Die Servicemaßnahmen können im Falle des über Funk mit der Fernrecheneinheit verbundenen Eingabegeräts durchgeführt werden, ohne dass hierzu ein Servicetechniker mit spezifischem Knowhow vor Ort erforderlich ist. Dadurch können die Servicemaßnahmen jederzeit bei mobilen Anwendungen und an einem beliebigen Ort durchgeführt werden.

Zu beachten ist, dass das erfindungsgemäße Endgerät unabhängig von einem jeweiligen Betriebs- bzw. Funktionszustand einer zentralen (elektronischen) Steuereinrichtung des Arbeitsgeräts/Fahrzeugs, mit der das Eingabegerät über die Hardwareschnittstelle sowie eine daran angeschlossene Datenleitung verbunden ist, gewartet, konfiguriert bzw. einer Diagnose seines Konfigurations-bzw. Funktionszustands unterzogen werden kann. Dadurch können unerwünschte Störeinflüsse der zentralen Steuereinrichtung eliminiert und Funktionsstörungen des Eingabegeräts zügiger bzw. zuverlässiger erkannt und behoben werden. Darüber hinaus können weitere relevante Daten der Bedieneinheit, beispielsweise im Datenspeicher der Steuereinheit abgespeicherte Fehlerjournale, Betriebsstunden des Eingabegeräts oder eine Gerätekennung, beispielsweise Seriennummer, des Eingabegeräts direkt mittels des mobilen Endgeräts oder aber mittels der über das mobile Endgerät verbunden zentralen Recheneinheit ausgelesen bzw. erfasst werden. Die erfassten Betriebsstunden können beispielsweise bei Leiharbeitsgeräten bzw. Leihfahrzeugen zur Abrechnung von Leih- bzw. Abnutzungsgebühren herangezogen oder zur Planung von anstehenden Wartungs- und Serviceeinsätzen bzw. Ersatzteilbestellungen herangezogen werden. Bei dem erfindungsgemäßen Eingabegerät ist darüber hinaus auch das Erfassen von Informationen zum jeweiligen geographischen Aufenthaltsort des Eingabegeräts und damit des Arbeitsgeräts bzw. Fahrzeugs anhand des mit dem Eingabegerät in Funkverbindung stehenden mobilen Endgeräts möglich. Über die drahtlose Kommunikationsschnittstelle des Eingabegeräts können, sofern die Hardwareschnittstelle des Eingabegeräts für eine bidirektionale Datenübertragung über die daran anzuschließende Datenleitung ausgelegt ist, darüber hinaus auch Firmware-Aktualisierungen für andere Eingabe- bzw. Steuergeräte des Arbeitsgeräts oder Fahrzeugs von dem mobilen Endgerät bzw. von der zentralen Recheneinheit über das mobile Endgerät in den jeweiligen anderen Eingabe- bzw. Steuergeräten installiert werden. Darüber hinaus kann die Steuereinheit des Eingabegeräts auch zur (Echtzeit-)Protokollierung eines jeweiligen Datentransfers über die an der Hardwareschnittstelle angeschlossene Datenleitung ausgelegt bzw. programmiert sein. Über die drahtlose Kommunikationsschnittstelle des Eingabegeräts können die Protokolle - ggf. in Echtzeit - bequem an das mobile Endgerät zur weiteren Auswertung am Endgerät oder aber der zentralen Recheneinheit übertragen werden. Dadurch kann im Störungsfall beispielsweise eine jeweilige Buslast der Datenleitung bei der Fehlersuche berücksichtigt werden.

Das Eingabegerät kann erfindungsgemäß insbesondere ein sogenannter Verbundantrieb, ein Fahrschalter, ein Fahr-Brems-Schalter oder ein Schifffahrtgeber sein.

Die drahtlose Kommunikationsschnittstelle der geräteinternen Steuereinheit kann erfindungsgemäß eine Bluetooth-, eine Nahfeldkommunikations- (NFC), eine ZigBee oder eine WLAN-Schnittstelle sein. Durch den Einsatz solcher Nahbereichs-Funkverbindungen kann sichergestellt werden, dass ein Zugriff auf die Steuereinheit des Eingabegeräts mittels des mobilen Endgeräts nur aus der unmittelbaren räumlichen Nähe, d.h. im Abstand von weniger als 10 oder 20 Metern, erfolgen kann. Bei vielen technischen Anwendungsmöglichkeiten des Eingabegeräts kommen, wie etwa bei Schiffen, in der Regel nur autorisierte Personen in die unmittelbare Nähe (den sogenannten Nahbereich) der der mit dem Eingabegerät ausgerüsteten Steuerstände der Arbeitsgeräte bzw. Fahrzeuge. Dadurch kann einem unerlaubten Zugriff auf die drahtlose Kommunikationsschnittstelle des Eingabegeräts entgegengewirkt werden.

Nach einer bevorzugten Weiterbildung der Erfindung kann die Kommunikationsschnittstelle ein räumlich gerichtetes Empfangs- bzw. Abstrahlverhalten aufweisen, um dadurch eine Kommunikation des Eingabegeräts mit dem Eingabegerät nur aus vorgegebenen Positionen des Benutzers relativ zum Eingabegerät zu ermöglichen. Dies bietet weitere Sicherheitsvorteile gegenüber einem unberechtigten Fernzugriff auf das Eingabegerät.

Für einen nochmals weiter verbesserten Schutz des Eingabegeräts vor einem unberechtigten Zugriff über die drahtlose Kommunikationsschnittstelle kann die Steuereinheit des Eingabegeräts eine Leistungsmesseinrichtung zum Bestimmen der Leistung von über die Kommunikationsschnittstelle des Eingabegeräts empfangenen Funksignalen aufweisen. Die geräteinterne Steuereinheit ist dabei dazu ausgebildet bzw. programmiert, einen drahtlosen Fernzugriff auf das Betriebssystem des Eingabegeräts nur bei einer vorgegebenen maximalen Leistung oder bei Unterschreiten einer vorgegebenen maximalen Leistung der empfangenen Funksignale freizugeben.

Das Eingabegerät kann erfindungsgemäß darüber hinaus einen, vorzugsweise gehäuseseitig angeordneten, Schalter aufweisen, mittels dessen die drahtlose Kommunikationsschnittstelle des Eingabegeräts aktivierbar und/oder deaktivierbar ist. Der Schalter kann im konstruktiv einfachsten Fall als ein Tast- oder Kippschalter ausgeführt sein. Die Eingabeeinheit kann zur Aktivierung der drahtlosen Kommunikationsschnittstelle alternativ auch mit einer Leseeinheit für ein Berechtigungsausweis, insbesondere einen RFID-Chip, ausgestattet sein. Eine Aktivierung der drahtlosen Kommunikationsschnittstelle mittels eines über die Hardwareschnittstelle des Eingabegeräts empfangenen Aktivierungscodes ist ebenso vorstellbar. Der Aktivierungscode kann beispielsweise ein rein numerisches oder auch ein alphanumerisches Passwort sein. Die Steuereinheit des Eingabegeräts ist in diesem Fall dazu programmiert, das empfangene Aktivierungscode mit einem in der Steuereinheit abgespeicherten authentischen Aktivierungscode zu vergleichen und die drahtlose Kommunikationsschnittstelle nur bei Übereinstimmung der beiden Codes zu aktivieren.

Nach einer bevorzugten Weiterbildung der Erfindung kann die drahtlose Kommunikationsschnittstelle des Eingabegeräts allein durch das Anlegen einer elektrischen Versorgungsspannung an das Eingabegerät, d.h. durch das Einschalten des Eingabegeräts (=Inbetriebnahme des Eingabegeräts mit "laden" des Betriebssystems) aktiviert werden. In diesem Fall kann die Steuereinheit insbesondere dazu ausgebildet sein, die drahtlose Kommunikationsschnittstelle nur für ein vorgegebenes Zeitintervall, beispielsweise weniger als zwei bis fünf Minuten, zu aktivieren und am Ende dieses Zeitintervalls zu deaktivieren.

Der Schutz des Eingabegeräts vor einem unberechtigten Zugriff kann unabhängig vom jeweiligen Aktivierungsmodus der drahtlosen Kommunikationsschnittstelle grundsätzlich dadurch weiter verbessert werden, dass die Steuereinheit dazu programmiert ist, die drahtlose Kommunikationsschnittstelle des Eingabegeräts selbststätig, insbesondere nach Ablauf einer vorgegebenen Aktivierungsdauer der drahtlosen Kommunikationsschnittstelle, zu deaktivieren.

Die drahtlose Kommunikationsschnittstelle des Eingabegeräts kann alternativ auch durch ein über diese Kommunikationsschnittstelle empfangenes Funksignal des mobilen Endgeräts deaktivierbar sein.

Nach einer bevorzugten Weiterbildung der Erfindung ist die Steuereinrichtung dazu programmiert, die drahtlose Kommunikationsschnittstelle bei einer benutzerseitigen manuellen Betätigung der Eingabeeinheit zu deaktivieren.

Im elektronischen Speicher des Eingabegeräts kann nach der Erfindung eine Gerätekennung, beispielsweise eine individuelle Seriennummer, zur eindeutigen Identifizierung des Geräts abgespeichert sein. Dies ermöglicht ein beschleunigtes Aufrufen bzw. Auswählen gerätespezifischer Diagnose- Wartungs- oder Konfigurationsdaten am Eingabegerät bzw. der mit dem Eingabegerät drahtlos verbundenen zentralen Recheneinheit. Die Steuereinheit ist in diesem Fall bevorzugt dazu programmiert, die Gerätekennung beim Aufbau einer Funkverbindung bzw. nach dem Aufbau der Funkverbindung mit dem mobilen Endgerät an das mobile Endgerät zu übermitteln.

Ein nochmals höheres Maß an Sicherheit gegenüber unbefugten Zugriffen auf die Steuereinheit des Eingabegeräts kann nach der Erfindung dadurch erreicht werden, dass die Steuereinheit derart programmiert ist, dass ein Zugriff auf das Betriebssystem des Eingabegeräts nur nach einer Authentifizierung des mobilen Eingabegeräts bzw. der Bedienperson als Zugriffsberechtigte gegenüber der Steuereinheit, zugelassen wird. In der Steuereinheit bzw. im Datenspeicher des Eingabegeräts kann dazu beispielsweise ein Authentifizierungscode abgespeichert sein. Die Steuereinheit kann in diesem Fall dazu programmiert sein, einen Zugriff auf das Betriebssystem des Eingabegeräts über die drahtlose Kommunikationsschnittstelle nur nach Übermitteln eines mit dem Authentifizierungscode übereinstimmenden Codes freizugeben.

Zur Minimierung der Gefahr von Störeinflüssen des Eingabegeräts auf ein mit dem Eingabegerät über die Hardwareschnittstelle verbundene zentrale Steuereinrichtung des Arbeitsgeräts bzw. Fahrzeugs hat es sich als vorteilhaft ergeben, dass die Steuereinheit des Eingabegeräts dazu programmiert ist, die Hardwareschnittstelle des Eingabegeräts bei Bedarf zu deaktivieren. Dies kann insbesondere beim Aktivieren der drahtlosen Kommunikationsschnittstelle des Eingabegeräts bzw. beim Aufbau einer Funkverbindung zwischen dem mobilen Endgerät und dem Eingabegerät oder aber beim Aufspielen einer neuen Betriebssoftware bzw. beim Konfigurieren der existierenden Betriebssoftware, der Fall sein.

Das erfindungsgemäße Dienstgerätesystem umfasst zumindest ein vorstehend erläutertes Eingabegerät und ein mobiles Endgerät mit einer CPU, einem Datenspeicher und einer im Datenspeicher abgespeicherten Anwendungssoftware. Das mobile Endgerät weist eine erste drahtlose Datenübertragungsschnittstelle auf, über die eine (Funk-) Datenverbindung mit der ersten Kommunikationsschnittstelle des Eingabegeräts herstellbar bzw. hergestellt ist und wobei die Anwendungssoftware zur Diagnose, Wartung und/oder Konfiguration des Eingabegeräts, d.h. deren Betriebssoftware, ausgebildet ist. Alternativ oder zusätzlich kann das mobile Endgerät eine zweite drahtlose Datenübertragungsschnittstelle aufweisen, die sich von der ersten drahtlosen Datenübertragungsschnittstelle unterscheidet. Die Anwendungssoftware des mobilen Endgeräts kann in diesem Fall dazu eingerichtet sein, die Steuereinheit des Eingabegeräts über die zweite drahtlose Datenübertragungsschnittstelle mit einer zentralen Recheneinheit für die Diagnose, Wartung und/oder Konfiguration des Eingabegeräts zu verbinden. Dies kann über ein Satellitenfunknetzwerk oder ein anderes Mobilfunknetzwerk, insbesondere nach dem GSM, LTE oder einem anderen geeigneten Funkstandard erfolgen. Das erfindungsgemäße Dienstgerätesystem erlaubt eine insgesamt, zügigere, flexiblere, Wartung und ggf. (Neu-) Konfiguration der Betriebssoftware sowie einfachere Diagnose von Fehlfunktionen des Eingabegeräts. So können mittels des mobilen Eingabegeräts bzw. der damit verbundenen zentralen Recheneinheit beispielsweise die vorgenannten Daten, d.h. insbesondere die Seriennummer des Eingabegeräts, (Echtzeit-) Protokolle eines Datentransfers über die an der Hardwareschnittstelle angeschlossene Datenleitung (Buslast), Betriebsstunden des Eingabegeräts oder auch Fehlerprotokolle ausgelesen werden.

Darüber hinaus kann über ein GPS-Modul bzw. eine jeweilige Verbindung des mobilen Endgeräts mit einer Funkrelaisstation eine jeweilige geographische Position des Eingabegeräts auf einfache Weise bestimmt werden. Dies ist insbesondere für die Planung von Servicemaßnahmen bzw. einen geplanten Austausch des Eingabegeräts von Vorteil.

Das erfindungsgemäße Dienstgerätesystem ermöglicht auch eine Wartung, Konfiguration sowie Störungs- bzw. Funktionsdiagnose weiterer (Eingabe-) Geräte, die sich von dem erfindungsgemäßen Eingabegerät unterscheiden und die über eine an die Hardwareschnittstelle des Eingabegeräts angeschlossene Datenleitung (beispielsweise eine Busleitung) des Arbeitsgeräts oder Fahrzeugs direkt oder indirekt mit dem Eingabegerät verbunden sind. Es versteht sich, dass die Hardwareschnittstelle sowie die geräteinterne Steuereinheit des Eingabegeräts sowie auch das bzw. die weiteren (Eingabe-)Geräte in diesem Fall für einen bidirektionalen Datentransfer ausgelegt sein müssen.

Das erfindungsgemäße Dienstgerätesystem kann insbesondere auch eine Mehrzahl der vorgenannten erfindungsgemäßen Eingabegeräte umfassen. In diesem Fall können über das mobile Eingabegerät mehrere Eingabegeräte - unabhängig voneinander - auf kostengünstige und einfache Weise gewartet, konfiguriert sowie Störungen analysiert und behoben werden.

Bei sicherheitsrelevanten Anwendungen des Eingabegeräts kann ein jeweiliger Datentransfer zwischen dem Eingabegerät und dem mobilen Endgerät bzw. der zentralen Recheneinheit erfindungsgemäß verschlüsselt sein.

Nachstehend wird die Erfindung anhand eines in der Zeichnung wiedergegebenen Ausführungsbeispiels näher erläutert.

In der Zeichnung zeigen
- Figur 1: ein Dienstgerätesystem mit einem als Verbundantrieb ausgebildeten Eingabegerät, dessen geräteinterne Steuereinheit eine Hardwareschnittstelle für die von der Eingabegerät generierten Steuersignale und eine drahtlose Kommunikationsschnittstelle aufweist, über die das Eingabegerät zwecks Fehlerdiagnose, Wartung bzw. Konfiguration des Eingabegeräts mit einem tragbaren Computer verbindbar ist; und
- Fig. 2: ein weiteres Dienstgerätesystem mit mehreren Eingabegeräten.

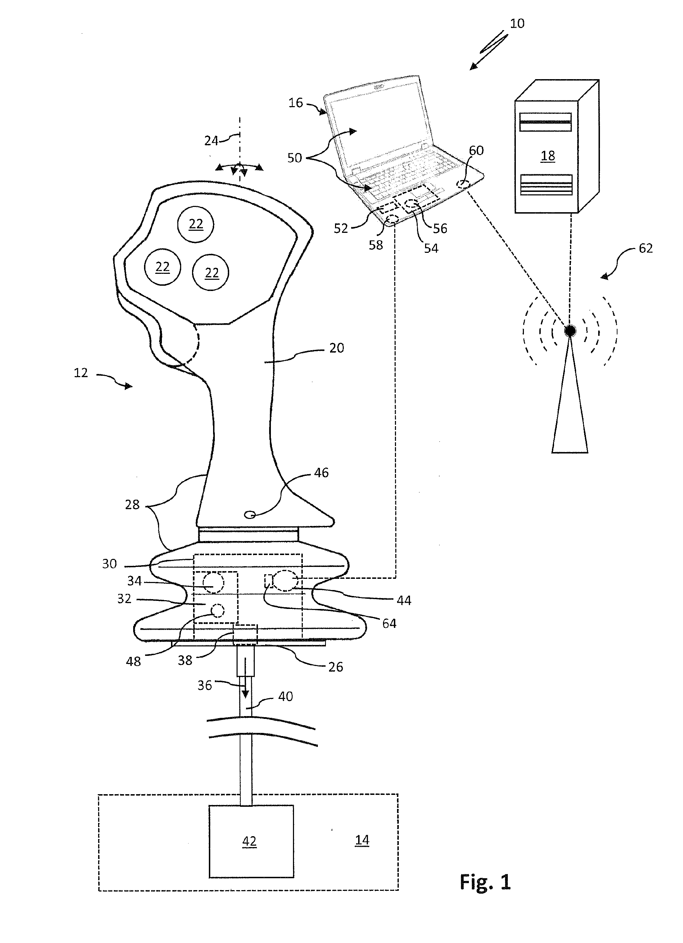

**Fig. 1** zeigt ein Dienstgerätesystem **10** mit einem Eingabegerät **12** zur Steuerung eines Arbeitsgeräts oder eines Fahrzeugs **14,** einem mobilen Endgerät **16** und einer zentralen Recheneinheit **18** für die Diagnose, Wartung und/oder Konfiguration des Eingabegeräts 12. Das Eingabegerät 12 kann beispielsweise als Fahrschalter, Fahr-Brems-Schalter, als Schifffahrtgeber oder, wie dies in Fig. 1 gezeigt ist, als ein Verbundantrieb, ausgebildet sein.

Das Eingabegerät **12** weist einen Betätigungsgriff **20** für die Hand einer Bedienperson auf. Der Betätigungsgriff 20 weist mehrere Schalter **22** auf und kann für Steuerungsaufgaben relativ zu seiner Längsachse **24** mehrachsig aus der gezeigten Neutralposition gegenüber einer An- oder Einbauplatte **26** ausgelenkt werden, wie dies mit den beiden Doppelpfeilen verdeutlicht ist. Die An- oder Einbauplatte 26 dient dem Ein- oder Anbau des Eingabegeräts 12 an eine Armaturentafel, ein Steuerpult oder dergl. Es versteht sich, dass anstatt der An- bzw. einbauplatte auch ein Rahmen oder dergleichen vorgesehen sein kann.

Ein Gehäuse des Eingabegeräts 12 ist mit **28** bezeichnet. Das Eingabegerät 12 weist eine eigene gehäuseinterne, d.h. innerhalb des Gehäuses 28 angeordnete, Steuereinheit **30** auf, die in der Figur mit gestrichelter Linie wiedergegeben ist. Die Steuereinheit 30 ist mit anderen Worten eine in das Eingabegerät 12 integrierte Baugruppe. Das Eingabegerät 12 und die Steuereinheit 30 bilden mithin gemeinsam eine Baueinheit.

Die Steuereinheit 30 umfasst einen elektronischen Datenspeicher **32** und eine im Datenspeicher 32 abgespeicherte Betriebssoftware **34** für den Betrieb des Eingabegeräts 12. Mittels der (veränderbaren) Betriebssoftware 34 können Konfigurationsdaten bzw. Betriebsparamater des Eingabegeräts 12 frei wählbar konfiguriert bzw. vorgegeben werden. So kann die Betriebssoftware 28 beispielsweise Kennlinien für die Erzeugung von Steuersignalen in Abhängigkeit von einem jeweiligen Auslenkwinkel des Betätigungsgriffs 20 aus seiner Neutralstellung bzw. einer jeweiligen Beschleunigung des Betätigungsgriffs umfassen. Darüber hinaus kann mittels der Betriebssoftware den Schaltern 16 eine definierte Steuerfunktion zugeordnet bzw. die Funktionsbelegung der Schalter frei definiert werden. Auf diese Weise kann das Eingabegerät 12 in seiner Funktionalität bedarfsweise angepasst werden.

Die Steuereinheit 24 des Eingabegeräts 12 weist zur Ausgabe der Steuersignale **36** eine Hardwareschnittstelle **38** auf. Die Hardwareschnittstelle 38 kann über eine an der Hardwareschnittstelle 38 angeschlossene Datenleitung **40** beispielsweise mit einer zentralen Steuereinrichtung **42** des Arbeitsgeräts bzw. Fahrzeugs 14 verbunden sein.

Die Steuereinheit 30 des Eingabegeräts 12 weist neben der Hardwareschnittstelle 38 eine drahtlose Kommunikationsschnittstelle **44** für einen drahtlosen Datenaustausch zwischen dem Eingabegerät 12 und dem mobilen Endgerät **16** auf. Die drahtlose Kommunikationsschnittstelle 44 kann beispielsweise als eine Blue-tooth-, eine Nahfeldkommunikations- (NFC), eine ZigBee, eine WLAN-Schnittstelle oder eine optische Kommunikationsschnittstelle ausgebildet sein. Zum manuellen Aktivieren bzw. Deaktivieren der drahtlosen Kommunikationsschnittstelle 44 kann das Eingabegerät 12 mit einem gehäuseseitig angeordneten Schalter **46** versehen sein.

In der Steuereinheit 30 kann eine individuelle Gerätekennung **48,** insbesondere eine digitale Seriennummer, zur eindeutigen Identifizierung des Eingabegeräts 12 gegenüber dem mobilen Endgerät 16 abgespeichert sein. Die Steuereinheit 30 des Eingabegeräts 12 kann in diesem Fall dazu programmiert sein, die Gerätekennung 48 beim oder nach dem Aufbau einer Funkverbindung mit dem mobilen Endgerät 14 an das mobile Endgerät 14 zu übermitteln.

Die Steuereinheit 30 des Eingabegeräts 12 kann aus Sicherheitsgründen dazu programmiert sein, die Hardwareschnittstelle 38 beim Aufbau einer Funkverbindung mit dem mobilen Endgerät 16 zu deaktivieren. Bei einer Konfiguration bzw. Wartung des Eingabegeräts 12 kann dadurch die Ausgabe unerwünschter Signale über die Hardwareschnittstelle 38 an die zentrale Steuereinrichtung 42 des Arbeitsgeräts bzw. Fahrzeugs 14 unterbunden werden. Das mobile Endgerät 16 kann, wie dies in Fig. 1 gezeigt ist, ein tragbarer Computer oder etwa ein Tablet-Computer bzw. ein Mobiltelefon sein. Das mobile Endgerät 16 weist eine Eingabe- und Anzeigeeinheit **50,** eine CPU **52,** einen Datenspeicher **54** und eine im Datenspeicher 52 abgespeicherte Anwendungssoftware **56** auf. Eine erste drahtlose Datenübertragungsschnittstelle **58** des Endgeräts dient dem Aufbau der drahtlosen (Nahbereichs-)Datenverbindung mit dem Eingabegerät 12. Die Anwendungssoftware 56 dient einer Diagnose, Wartung und/oder Konfiguration des Eingabegeräts 12 bzw. dessen Betriebssoftware 34.

Das mobile Endgerät 16 ist bei dem gezeigten Ausführungsbeispiel mit einer weiteren drahtlosen Datenübertragungsschnittstelle 60 versehen, die sich von der ersten Datenübertragungsschnittstelle 58 unterscheidet. Die zweite drahtlose Datenübertragungsschnittstelle 60 des mobilen Endgeräts 16 kann beispielsweise eine Satellitenfunkschnittstelle oder eine andere Mobilfunkschnittstelle, etwa gemäß dem GSM, GPRS, EDGE, UMTS, HSDPA, oder dem LTE Standard, sein.

Das mobile Endgerät 16 bzw. die Anwendungssoftware 56 ist vorliegend dazu eingerichtet, die Steuereinheit 30 des Eingabegeräts 12 über die zweite drahtlose Datenübertragungsschnittstelle und ein jeweiliges Mobilfunknetz **62** mit der Fernrecheneinheit 18 für die Diagnose, Wartung und/oder Konfiguration des Eingabegeräts zu verbinden. Dadurch wird für die am Eingabegerät erforderlichen Servicemaßnahmen kein spezifisches Know-how benötigt. Die Fernrecheneinheit kann beispielsweise beim Hersteller des Eingabegeräts 12 oder bei einem Servicepartner lokalisiert sein. In diesem Fall fungiert das mobile Endgerät 16 somit im Wesentlichen als ein Relais- bzw. Umschaltgerät zum Aufbau einer Datenverbindung zwischen der zentralen Recheneinheit und dem Eingabegerät 12.

Die drahtlose Kommunikationsschnittstelle 44 des Eingabegeräts 12 kann aus Sicherheitsgründen ein räumlich gerichtetes Empfangs- und/oder Abstrahlverhalten aufweisen. Dadurch kann eine Funkverbindung zwischen dem mobilen Endgerät 16 und dem Eingabegerät 12 nur aus einer vorgegebenen räumlichen Position relativ zum Eingabegerät 12 aufgebaut werden.

Darüber hinaus kann die Steuereinheit 30 des Eingabegeräts 12 eine Leistungsmesseinrichtung **64** zum Bestimmen der Leistung von über die Kommunikationsschnittstelle 44 des Eingabegeräts 12 empfangenen Funksignalen aufweisen. Die Steuereinheit 30 ist in diesem Fall dazu programmiert, einen drahtlosen Zugriff auf die Betriebssoftware 34 des Eingabegeräts 12 nur beim Empfang von Funksignalen freizugeben, deren Leistung gleich oder kleiner als eine vorgegebene maximale Funksignalleistung ist.

Zur nochmals weitergehenden Absicherung des Eingabegeräts 12 vor unbefugten drahtlosen Zugriff kann die Steuereinheit 30 dazu programmiert sein, die drahtlose Kommunikationsschnittstelle 44 selbststätig, beispielsweise nach Ablauf einer vorgegebenen maximalen Aktivierungsdauer, zu deaktivieren. Alternativ oder zusätzlich kann die drahtlose Kommunikationsschnittstelle 44 auch durch ein über die Kommunikationsschnittstelle 44 empfangenes Signal des mobilen Endgeräts 16 deaktivierbar sein. Ein Datenaustausch zwischen dem Eingabegerät 12 und dem mobilen Endgerät 16 bzw. der Fernrecheneinheit 18 kann verschlüsselt erfolgen.

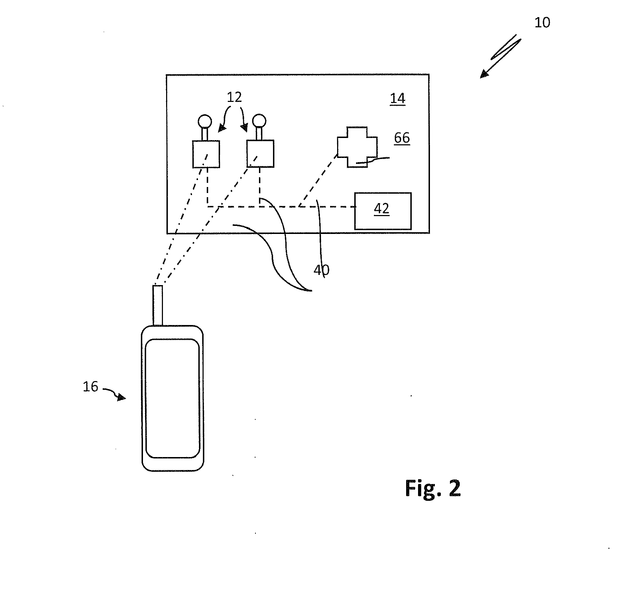

In **Fig. 2** ist ein Dienstgerätesystem 10 schematisiert wiedergegeben, das sich von dem vorstehend im Zusammenhang mit Fig. 1 erläuterten Dienstgerätesystem im Wesentlichen darin unterscheidet, dass dieses zwei Eingabegeräte 12 umfasst, die zur Steuerung des Arbeitsgeräts bzw. Fahrzeugs 14 dienen. Die Steuereinheiten 30 der beiden Endgeräte 12 sind jeweils über die Hardwareschnittstelle (Fig. 1) und die daran angeschlossene Datenleitung 40 des Arbeitsgeräts bzw. Fahrzeugs 14 mit der zentralen Steuereinrichtung 42 des Arbeitsgeräts/Fahrzeugs 14 verbunden. Die Datenleitung 40 kann insbesondere als Datenbus (Busleitung) ausgebildet sein. Das mobile Endgerät 16 ist beispielhaft als sogenanntes Smartphone ausgeführt.

Das mobile Endgerät 16 kann in einer zu dem in Fig.1 gezeigten Dienstgerätesystem entsprechenden Weise mit einer zentralen Recheneinheit (nicht gezeigt) in Verbindung stehen. Mittels des mobilen Endgeräts 16 kann die Diagnose, Wartung bzw. Konfiguration der beiden Eingabegeräte 12 zeitversetzt durchgeführt werden. Darüber hinaus können mit dem mobilen Endgerät 16 Informationen zu einem jeweiligen Datenfluss über die Busleitung, beispielsweise einer jeweiligen Buslast, sowie zu weiteren an die Datenleitung 40 bzw. an die zentrale Steuereinheit 42 des Arbeitsgeräts/Fahrzeugs 14 angeschlossenen Geräten **66,** beispielsweise Fahrschaltern, Fahr-Bremsschaltern und dergleichen, gewonnen werden, sobald eine entsprechende drahtlose Datenverbindung des mobilen Endgeräts 16 mit einem der Eingabegeräte 12 des Arbeitsgeräts/Fahrzeugs 14 aufgebaut ist. Das mobile Endgerät 16 kann bei einer entsprechenden Auslegung der Anwendungssoftware (Fig. 1) bzw. einer mit dem mobilen Endgerät 16 in Verbindung stehenden zentralen Recheneinheit (Fig. 1) auch zur Wartung, Diagnose bzw. Konfiguration der weiteren Geräte 66 eingesetzt werden. Dies ggf. unabhängig davon, ob diese über die Datenleitung oder eine andere Schnittstelle an der zentralen Steuereinheit 42 des Arbeitsgeräts/Fahrzeugs 14 angeschlossen sind.

## Patentansprüche

1. Eingabegerät (12), insbesondere Verbundantrieb, zum Steuern von Arbeitsgeräten und Fahrzeugen (14), umfassend eine im Eingabegerät (12) integrierte Steuereinheit (30)
- mit einem Datenspeicher (32),
- mit einer im Datenspeicher (32) abgespeicherten Betriebssoftware (34) zum Erzeugen von Steuersignalen (36) auf Grundlage einer Betätigung des Eingabegeräts (30);
- mit einer Hardwareschnittstelle (38) zur Ausgabe der Steuersignale (36) über eine an der Hardwareschnittstelle anschließbare Datenleitung des Arbeitsgeräts oder Fahrzeugs; und
- mit einer drahtlosen Kommunikationsschnittstelle (44) für eine drahtlose Verbindung des Eingabegeräts (12) mit einem mobilen Endgerät (16), das zur Diagnose-, Wartung und/oder Konfiguration des Eingabegeräts (12) ausgebildet ist oder über das eine Verbindung des Eingabegeräts (12) mit einer zentralen Recheneinheit (18) zur Diagnose-, Wartung und/oder Konfiguration des Eingabegeräts (12) herstellbar ist.

2. Eingabegerät nach Anspruch 1, **dadurch gekennzeichnet, dass** die drahtlose Kommunikationsschnittstelle (44) der Steuereinheit (30) des Eingabegeräts (12) eine Bluetooth-, eine Nahfeldkommunikations- (NFC), eine ZigBee, eine WLAN-Schnittstelle oder eine optische Kommunikationsschnittstelle ist.

3. Eingabegerät nach einem der Ansprüche 1 oder 2, **dadurch gekennzeichnet, dass** die drahtlose Kommunikationsschnittstelle (44) des Eingabegeräts (12) ein räumlich gerichtetes Empfangs- und/oder Abstrahlverhalten aufweist.

4. Eingabegerät nach einem der vorhergehenden Ansprüche, **dadurch gekennzeichnet, dass** die Steuereinheit (30) des Eingabegeräts (12) eine Leistungsmesseinrichtung zum Bestimmen der Leistung von über die Kommunikationsschnittstelle (44) des Eingabegeräts (12) empfangenen Funksignalen aufweist, wobei die Steuereinheit (30) dazu programmiert ist, einen drahtlosen Zugriff auf das Betriebssystem des Eingabegeräts (12) nur beim Empfang von Funksignalen freizugeben, deren Leistung gleich oder kleiner als eine vorgegebene maximale Funksignalleistung ist.

5. Eingabegerät nach einem der vorhergehenden Ansprüche, **dadurch gekennzeichnet, dass** das die drahtlose Kommunikationsschnittstelle (44) des Eingabegeräts (12) mittels eines gehäuseseitig angeordneten Schalters (46) aktivierbar und/oder deaktivierbar ist.

6. Eingabegerät nach einem der vorhergehenden Ansprüche, **dadurch gekennzeichnet, dass** die Steuereinrichtung (30) dazu programmiert ist, die drahtlose Kommunikationsschnittstelle (44) selbststätig, insbesondere nach Ablauf einer vorgegebenen Aktivierungsdauer der drahtlosen Kommunikationsschnittstelle (44), zu deaktivieren oder dass die drahtlose Kommunikationsschnittstelle (44) durch ein über die Kommunikationsschnittstelle empfangenes Funksignal des mobilen Endgeräts (16) deaktivierbar ist.

7. Eingabegerät nach einem der vorhergehenden Ansprüche, **dadurch gekennzeichnet, dass** in der Steuereinheit (30) eine individuelle Gerätekennung (48) abgespeichert sind, wobei die Steuereinheit (30) dazu programmiert ist, die Gerätekennung (48) beim oder nach dem Aufbau einer Funkverbindung des Eingabegeräts (12) mit dem mobilen Endgerät (16) an das mobile Endgerät (16) zu übermitteln.

8. Eingabegerät nach einem der vorhergehenden Ansprüche, **dadurch gekennzeichnet, dass** die Steuereinheit (30) dazu programmiert ist, die Hardwareschnittstelle (38) des Eingabegeräts (12) beim Aufbau einer Funkverbindung mit dem mobilen Endgerät (16) zu deaktivieren.

9. Eingabegerät nach einem der vorhergehenden Ansprüche, **dadurch gekennzeichnet, dass** das Eingabegerät (12) ein Verbundantrieb, ein Fahrschalter, ein Fahr-Brems-Schalter oder ein Schifffahrtgeber ist.

10. Dienstgerätesystem (10) mit zumindest einem Eingabegerät (12) nach einem der vorhergehenden Ansprüche, und mit einem mobilen Endgerät (16) mit einer CPU (52), einem Datenspeicher (54) und einer im Datenspeicher (54) abgespeicherten Anwendungssoftware (56), wobei das mobile Endgerät (16) eine erste Schnittstelle (58) aufweist, über die eine drahtlose Datenverbindung mit der ersten Kommunikationsschnittstelle (44) des Eingabegeräts (12) herstellbar ist und
wobei
a) die Anwendungssoftware (56) zur Diagnose, Wartung, und/oder Konfiguration des Eingabegeräts (12) ausgebildet ist und/oder
b) wobei das mobile Endgerät (16) eine zweite Schnittstelle (60) aufweist, die sich von der ersten Schnittstelle (58) unterscheidet und wobei die Anwendungssoftware (56) dazu eingerichtet ist, die Steuereinheit (30) des Eingabegeräts (12) über die zweite Schnittstelle mit einer zentralen Recheneinheit (18) für die Diagnose, Wartung und/oder Konfiguration des Eingabegeräts (12) zu verbinden.

11. Dienstgerätesystem nach Anspruch 10, **dadurch gekennzeichnet, dass** dieses mehrere Eingabegeräte (12) umfasst.

12. Dienstgerätesystem nach Anspruch 10 oder 11, **dadurch gekennzeichnet, dass** die Anwendungssoftware (56) zur zeitversetzten Diagnose, Wartung und/oder Konfiguration der Eingabegeräte (12) ausgebildet ist.

13. Dienstgerätesystem nach einem der Ansprüche bis 10 bis 12, **dadurch gekennzeichnet, dass** ein jeweiliger Datentransfer über die drahtlose Kommunikationsschnittstelle (44) des Eingabegeräts (12) und die Schnittstelle (58) des mobilen Endgeräts (16) verschlüsselt ist.

14. Dienstgerätesystem nach einem der Ansprüche 10 bis 13, **dadurch gekennzeichnet, dass** das mobile Endgerät (16) ein tragbarer Computer oder ein Mobiltelefon ist.

## Geänderte Patentansprüche

### Geänderte Patentansprüche gemäss Regel 137(2) EPÜ.

1. Als Fahrschalter oder Fahr-Bremsschalter ausgebildetes Eingabegerät (12) zum Steuern von Arbeitsgeräten und Fahrzeugen (14), umfassend ein Gehäuse (28) und eine im Gehäuse integrierte Steuereinheit (30), die gemeinsam eine Baueinheit bilden, wobei die Steuereinheit aufweist:
- einen Datenspeicher (32),
- eine im Datenspeicher (32) abgespeicherte Betriebssoftware (34) zum Erzeugen von Steuersignalen (36) auf Grundlage einer Betätigung des Eingabegeräts (12);
- eine Hardwareschnittstelle (38) zur Ausgabe der Steuersignale (36) über eine an der Hardwareschnittstelle (38) anschließbare Datenleitung des Arbeitsgeräts oder Fahrzeugs; und
- eine drahtlose Kommunikationsschnittstelle (44) für eine drahtlose Verbindung des Eingabegeräts (12) mit einem mobilen Endgerät (16), das zur Diagnose-, Wartung und/oder Konfiguration des Eingabegeräts (12) ausgebildet ist oder über das eine Verbindung des Eingabegeräts (12) mit einer zentralen Recheneinheit (18) zur Diagnose-, Wartung und/oder Konfiguration des Eingabegeräts (12) herstellbar ist.

2. Eingabegerät nach Anspruch 1, **dadurch gekennzeichnet, dass** die drahtlose Kommunikationsschnittstelle (44) der Steuereinheit (30) des Eingabegeräts (12) eine Bluetooth-, eine Nahfeldkommunikations- (NFC), eine ZigBee, eine WLAN-Schnittstelle oder eine optische Kommunikationsschnittstelle ist.

3. Eingabegerät nach einem der vorhergehenden Ansprüche, **dadurch gekennzeichnet, dass** das die drahtlose Kommunikationsschnittstelle (44) des Eingabegeräts (12) mittels eines gehäuseseitig angeordneten Schalters (46) aktivierbar und/oder deaktivierbar ist.

4. Eingabegerät nach einem der vorhergehenden Ansprüche, **dadurch gekennzeichnet, dass** die Steuereinrichtung (30) dazu programmiert ist, die drahtlose Kommunikationsschnittstelle (44) selbststätig, insbesondere nach Ablauf einer vorgegebenen Aktivierungsdauer der drahtlosen Kommunikationsschnittstelle (44), zu deaktivieren oder dass die drahtlose Kommunikationsschnittstelle (44) durch ein über die Kommunikationsschnittstelle empfangenes Funksignal des mobilen Endgeräts (16) deaktivierbar ist.

5. Eingabegerät nach einem der vorhergehenden Ansprüche, **dadurch gekennzeichnet, dass** in der Steuereinheit (30) eine individuelle Gerätekennung (48) abgespeichert sind, wobei die Steuereinheit (30) dazu programmiert ist, die Gerätekennung (48) beim oder nach dem Aufbau einer Funkverbindung des Eingabegeräts (12) mit dem mobilen Endgerät (16) an das mobile Endgerät (16) zu übermitteln.

6. Eingabegerät nach einem der vorhergehenden Ansprüche, **dadurch gekennzeichnet, dass** die Steuereinheit (30) dazu programmiert ist, die Hardwareschnittstelle (38) des Eingabegeräts (12) beim Aufbau einer Funkverbindung mit dem mobilen Endgerät (16) zu deaktivieren.

7. Eingabegerät nach einem der vorhergehenden Ansprüche, **dadurch gekennzeichnet, dass** das Eingabegerät (12) ein Verbundantrieb, ein Fahrschalter, ein Fahr-Brems-Schalter oder ein Schifffahrtgeber ist.

8. Dienstgerätesystem (10) mit zumindest einem Eingabegerät (12) nach einem der vorhergehenden Ansprüche, und mit einem mobilen Endgerät (16) mit einer CPU (52), einem Datenspeicher (54) und einer im Datenspeicher (54) abgespeicherten Anwendungssoftware (56), wobei das mobile Endgerät (16) eine erste Schnittstelle (58) aufweist, über die eine drahtlose Datenverbindung mit der ersten Kommunikationsschnittstelle (44) des Eingabegeräts (12) herstellbar ist und
wobei
a) die Anwendungssoftware (56) zur Diagnose, Wartung, und/oder Konfiguration des Eingabegeräts (12) ausgebildet ist und/oder
b) wobei das mobile Endgerät (16) eine zweite Schnittstelle (60) aufweist, die sich von der ersten Schnittstelle (58) unterscheidet und wobei die Anwendungssoftware (56) dazu eingerichtet ist, die Steuereinheit (30) des Eingabegeräts (12) über die zweite Schnittstelle mit einer zentralen Recheneinheit (18) für die Diagnose, Wartung und/oder Konfiguration des Eingabegeräts (12) zu verbinden.

9. Dienstgerätesystem nach Anspruch 8, **dadurch gekennzeichnet, dass** dieses mehrere Eingabegeräte (12) umfasst.

10. Dienstgerätesystem nach Anspruch 8 oder 9, **dadurch gekennzeichnet, dass** die Anwendungssoftware (56) zur zeitversetzten Diagnose, Wartung und/oder Konfiguration der Eingabegeräte (12) ausgebildet ist.

11. Dienstgerätesystem nach einem der Ansprüche 8 bis 10, **dadurch gekennzeichnet, dass** ein jeweiliger Datentransfer über die drahtlose Kommunikationsschnittstelle (44) des Eingabegeräts (12) und die Schnittstelle (58) des mobilen Endgeräts (16) verschlüsselt ist.

12. Dienstgerätesystem nach einem der Ansprüche 8 bis 11, **dadurch gekennzeichnet, dass** das mobile Endgerät (16) ein tragbarer Computer oder ein Mobiltelefon ist.
